(19) **Europäisches Patentamt**

**European Patent Office**

**Office européen des brevets**

(11) **EP 1 349 221 A2**

(12) **EUROPÄISCHE PATENTANMELDUNG**

(43) Veröffentlichungstag:
**01.10.2003 Patentblatt 2003/40**

(51) Int Cl.⁷: **H01M 2/16**

(21) Anmeldenummer: **02023842.4**

(22) Anmeldetag: **24.10.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **26.03.2002 DE 10213449**

(71) Anmelder: **Carl Freudenberg KG
69469 Weinheim (DE)**

(72) Erfinder:
• **Kritzer, Peter
67147 Forst (DE)**
• **Trautmann, Christian
64658 Fürth (DE)**

(54) **Hydrophiliertes Separatormaterial**

(57)    Die Erfindung betrifft ein hydrophiliertes Separatormaterial aus synthetischen Fasern und/oder Filamenten, welches vor seiner Verwendung in einer alkalischen Batterie mit 0,01 - 10 g/m² Alkalihydroxid und/oder -carbonat imprägniert ist. Die Erfindung betrifft weiterhin ein Verfahren zur Herstellung eines solchen Separatormaterials sowie einer alkalischen Zelle oder Batterie, die ein solches Separatormaterial enthält.

**Beschreibung**

Gegenstand dieser Erfindung sind flächige, flexible, elektrolytbeständige Separatormaterialien, die schnell und vollständig mit einem wässrigen, alkalischen Elektrolyt benetzbar sind. Die Erfindung betrifft weiterhin Verfahren zur Herstellung eines solchen Separatormaterials und alkalische Batterien oder Zellen, die solche Separatoren enthalten.

Stand der Technik

Separatoren dienen dazu, in elektrochemischen Energiespeichern eine Berührung von positiven und negativen Elektroden und damit einen unerwünschten Stromfluss zwischen den Elektroden zu vermeiden, ohne jedoch den Durchgang von Ionen der Elektrolytflüssigkeit wesentlich zu behindern. Die eingesetzten Separatormaterialien müssen dabei folgende Eigenschaften aufweisen:

- Beständigkeit gegenüber dem Elektrolyten (meist konzentrierte Kali- oder Natronlauge) bei Temperaturen bis 70 °C,
- Beständigkeit gegenüber Oxidation,
- geringer Ionendurchgangswiderstand,
- hoher Elektronendurchgangswiderstand,
- permanente Benetzbarkeit durch den Elektrolyten,
- hohe Anfangsbenetzbarkeit durch den Elektrolyten,
- hohe Speicherkapazität für den Elektrolyten,
- Rückhaltevermögen für Partikel, die von den Elektroden abgelöst werden,
- geringe Dickentoleranz und
- hohe mechanische Stabilität.

Mit wässrigem, alkalischen Elektrolyt versehene Zellen, wie z.B. Nickel-Cadmium- oder Nickel-Wasserstoff- und Nickel-Metallhydrid-Akkumulatoren, aber auch alkalische Primärzellen wie Alkalimangan oder Silberoxidzellen erfordern ein Separatormaterial, welches bei der zunehmend verkürzten Taktzeit der Fertigung eine schnelle Aufnahme des wässrigen, alkalischen Elektrolyten gewährleistet.

Ungünstigerweise sind die für die Herstellung von Separatormaterial für alkalische Zellen verwendeten synthetischen Fasern von Natur aus hydrophob und können deshalb die wichtige Anforderung einer schnellen und guten Benetzbarkeit durch den Elektrolyten in dem geforderten Maße nicht erfüllen. Eine schlechte Benetzbarkeit führt jedoch zu Störungen bei der Herstellung der Zellen, da der zudosierte Elektrolyt nicht genügend schnell aufgenommen und im Inneren der Zelle verteilt werden kann. Bei kurzen Taktzeiten führt dies zu einer ungenügenden Befüllung der Zellen oder einer Beschmutzung der Produktionsmittel. Auch beim Betrieb des Energiespeichers kommt es aufgrund der schlechten Benetzbarkeit zur Ansammlung von Gasblasen auf und in dem Separatormaterial, durch die der Ionendurchgang nachhaltig behindert und infolgedessen auch die Leistungsfähigkeit der Zellen vermindert wird. Bei gasdichten Zellen entsteht ein Überdruck, der zur Leckage oder sogar zum Bersten des Zellgehäuses führen kann.

Es wurden bereits verschiedene Versuche unternommen, Separatormaterial aus an sich hydrophoben Fasern für die Verwendung in einem elektrochemischen Energiespeicher besser benetzbar, d.h. hydrophiler zu machen. Das Dokument US 3,947,537 beschreibt dazu eine Behandlung der Faseroberflächen mit einem oberflächenaktiven Mittel, einem Tensid.

Das Dokument DE-A 25 43 149 schlägt den Zusatz hydrophiler Substanzen zur Polymerschmelze vor, die für das Erspinnen von den separatorbildenden Fasern oder Filamenten eingesetzt werden.

Das Dokument DE-A 195 23 231 offenbart ein Verfahren zur Gasphasen-Fluorierung eines Separatormaterials. Dabei wird ein geringer Anteil der Wasserstoffatome des Polyolefins durch Fluoratome substituiert, wodurch partiell positiv und negativ geladene Regionen generiert werden, die eine Hydrophilie erzeugen. Typische Elektrolytsteighöhen von auf diese Weise modifizierten Separatoren liegen im Bereich von 30 mm/10 Min.

Aus dem Dokument JP 55 07 40 57 ist ein Verfahren zur Propfung von ungesättigten, organischen Säuren bzw. Säurederivaten auf Polyolefine zur Verbesserung der Elektrolytadsorption bekannt. Dieses Verfahren führt zu einem Vorhandensein von hydrophilen Carboxylgruppen, die eine permanente Benetzbarkeit gewährleisten. Die Propfung erfolgt dabei auf nasschemischem Wege. Alternativ dazu sind aber auch physikalisch induzierte Propfungen durch UV-, Beta- oder Gammastrahlung sowie Corona- bzw. Plasmabehandlungen bekannt.

Das Dokument JP 06 16 30 21 offenbart zur Erzeugung von Carboxylgruppen in einem Separatormaterial die Verwendung von Fasern, die durch Copolymerisation von Acrylnitril und Vinylchlorid erhalten wurden, im Gemisch mit Polyolefinfasern.

Eine Verbesserung der Hydrophilie von Separatormaterial wird auch durch eine Sulfonierung erreicht. So beschreibt das Dokument JP 01 14 62 70 die Sulfonierung eines aus Polyolefinfasern bestehenden Vliesstoffes. Zwar vermindert die Sulfonierung von Separatormaterial wirkungsvoll die Selbstentladung von Nickel-Metallhydrid-Zellen, weshalb sie trotz ihres vergleichsweise hohen Preises verbreitet Anwendung für diese Applikation findet, allerdings ist bei sulfonierten Produkten die Anfangsbenetzbarkeit sehr gering, so dass beim Befüllen der Batterien auf aufwendige technische Verfahren, wie z.B. eine Vakuumbefüllung, zurückgegriffen werden muß. Alternativ können sulfonierte Separatoren auch mit einem Netzmittel ausgerüstet werden, welches sich allerdings aufgrund seiner elektrochemischen Unbeständigkeit negativ auf das Lade- und Entladeverhalten der Zellen auswirkt.

Dokument EP-A 591 616 beschreibt ein hydrophiliertes Separatormaterial, welches vor seiner Verwendung mit 0,5 bis 7 Gew.% entionisiertem Wasser, bezogen auf das Trockengewicht des Separatormaterials, befeuchtet ist.

Dokument JP 06 18 79 62 beschreibt ein Separatormaterial für alkalische Batterien, bei dem die Oberflächen der Fasern zumindest teilweise mit einem Acrylsäureharz beschichtet sind.

Schließlich ist aus dem Dokument JP 08 06 41 93 ein Separator für alkalische Batterien bekannt, welcher anorganische Oxidpartikel enthält, die durch ihre selbstbindenden Eigenschaften bei der Abscheidung aus einem Gel kolloidal auf den Fasern des Separatormaterials abgeschieden wird.

Darstellung der Erfindung

Die Erfindung hat sich die Aufgabe gestellt, ein hydrophiliertes Separatormaterial anzugeben, welches eine sehr gute Anfangsbenetzbarkeit und damit eine erhöhte Hydrophilie aufweist. Weiterhin stellt sich die Erfindung die Aufgabe, ein Verfahren anzugeben, welches es in einfacher Weise gestattet, die Hydrophilie des Separatormaterials zu erhöhen. Die Erfindung betrifft letztlich auch eine alkalische Zelle oder Batterie, welche das erfindungsgemäße hydrophilierte Separatormaterial enthält.

Erfindungsgemäß wird die Aufgabe dadurch gelöst, dass das gattungsgemäß beschriebene Separatormaterial aus synthetischen Fasern und/oder Filamenten vor seiner Verwendung mit 0,01 bis 10 g/m$^2$ Alkalihydroxid und/oder-carbonat imprägniert ist. Die erfindungsgemäßen Separatormaterialien, die 0,01 bis 10 g/m$^2$ Alkalihydroxid und/oder -carbonat enthalten, zeigen eine gegenüber vergleichbarem Separatormaterial, welches keine Alkalihydroxide oder -carbonate enthält, verbesserte Anfangsbenetzbarkeit. Diese drückt sich in größeren Steighöhen bzw. verkürzten Zeiten bis zum Erreichen der maximalen Steighöhe aus.

Vorteilhafterweise sind die synthetischen Fasern und/oder Filamente chemikalienresistent gegen stark alkalische Lösungen. Insbesondere in Zellen oder Batterien, welche eine lange Lebensdauer besitzen, wird dadurch eine erhöhte Ausfallsicherheit erreicht.

Besonders bevorzugt ist ein hydrophiliertes Separatormaterial, bei dem die synthetischen Fasern und/oder Filamente als Vliesstoff vorliegen. Erfindungsgemäße hydrophilierte Separatormaterialien, welche als Vliesstoff vorliegen, besitzen zum einen hinsichtlich der Kosten Vorteile und zum anderen kann trotz der Feinheit der Fasern eine hohe Sicherheit gegen das Durchdringen des Vliesstoffes durch Dentriten gewährleistet werden.

Besonders bevorzugt ist weiterhin ein hydrophiliertes Separatormaterial, welches vor oder nach der Imprägnierung durch Sulfonierung, Fluorierung oder Pfropfung mit polaren Substanzen zusätzlich hydrophiliert ist.

Das erfindungsgemäße Verfahren zur Herstellung eines hydrophilierten Separatormaterials aus synthetischen Fasern und/oder Filamenten erfolgt in der Weise, dass man das Separatormaterial mit einer wässrigen Lösung eines Alkalihydroxids und/oder -carbonats imprägniert und anschließend trocknet. Dieses Verfahren gestattet in sehr einfacher und kostengünstiger Weise, die Anfangsbenetzbarkeit und damit die Hydrophilie des Separatormaterials zu erhöhen.

Erfindungsgemäß werden die Hydroxide und/oder -carbonate von Lithium, Natrium und/oder Kalium eingesetzt.

Vorteilhafterweise werden als synthetische Fasern und/oder Filamente solche aus Polyolefinen, Polyamiden, Polysulfonen, Polyphenylidensulfiden, Polyacetalen und/oder perfluorierten Polyolefinen verwendet für die Herstellung des Separatormaterials. Die vorstehend genannten Polymeren haben sich hinsichtlich ihrer Chemikalienresistenz gegenüber stark alkalischen Lösungen, wie sie als Elektrolyt in alkalischen Zellen oder Batterien eingesetzt werden, bewährt.

Vorteilhafterweise wird der als Separatormaterial eingesetzte Vliesstoff aus einer Mischung von Polyamid- und/oder Polyolefinfasern mit unterschiedlichem Erweichungsbereich hergestellt, wobei die niedriger schmelzenden Fasern in einem Gewichtsanteil von 30 - 90 % vorliegen und auf einer Krempelmaschine zu einem Vlies gelegt sowie durch Erweichen der niedriger schmelzenden Faseranteile in einem Ofen und anschließende Kalibrierung unter Druckeinwirkung in einem Kalander zur gewünschten Enddicke und nach dem Abkühlen zu einem autogen verschweißten Vliesstoff verfestigt.

Die Erfindung betrifft letztlich auch alkalische Batterien oder Zellen, welche ein hydrophiliertes Separatormaterial gemäß der Erfindung, d.h. einen Anteil von 0,01 - 10 g/m$^2$ Alkalihydroxid und/oder -carbonat aufweisendes Separatormaterial, enthalten.

Beispiele

DIN-A4-Blätter aus verschiedenen Materialien wurden in KOH- bzw. $K_2CO_3$-Lösungen getränkt. Mit Hilfe eines Foulhard-Quetschwerks (p = 0,5 Mpa; V = 1,5 m/min) wurde eine definierte Nassaufnahme der Lösung erzielt, aus der die Beladung an KOH bzw. $K_2CO_3$ pro Quadratmeter Vliesstoff zurückgerechnet wurde (0,01 bis 1 g/m$^2$).

Für jeden Versuch wurden jeweils 3 Blätter nach dieser Methode hergestellt. Als Basismaterialien kamen unausgerüstete, fluorierte und sulfonierte Polyolefin-Vliesstoffe sowie Polyphenylidensulfid-Vliesstoffe zum Einsatz.

Nach dem Foulhardieren erfolgte Trocknung an Luft bei Raumtemperatur.

Die Steighöhen wurden wie folgt ermittelt: Aus den A4-Mustern wurden jeweils 2 Streifen in den Dimensionen 200 mm x 20 mm gestanzt. Diese wurden senkrecht eingespannt und mit dem Ende ca. 10 mm in den Musterelektrolyten (30 % KOH) getaucht. Die Steighöhe des Elektrolyten wurde in Zeiten von 1, 5 und 10 Min. visuell bestimmt. Als Blindproben wurden jeweils unbehandelte Muster eingesetzt.

**Beispiel 1**

Die wie oben beschrieben ermittelten Steighöhen für unfluorierte Polyolefin-Vliesstoffe sind in Tabelle 1 dargestellt.

Tabelle 1:

| Steighöhen von 30% iger KOH-Lösung bei einem unfluorierten Polyolefin-Nassvlies | | | |
|---|---|---|---|
| [KOH] | Steighöhe | Steighöhe | Steighöhe |
| g/m$^2$ | (mm / 1 min) | (mm / 5 min) | (mm / 10 min) |
| 0 | 0 | 9 | 19 |
| 0.01 | 8 | 15 | 25 |
| 0.1 | 10 | 33 | 40 |
| 0.5 | 17 | 35 | 53 |
| 1.0 | 24 | 45 | 61 |

**Beispiel 2**

Die ermittelten Steighöhen für fluorierte Polyolefin-Vliesstoffe sind in Tabelle 2 dargestellt.

Tabelle 2:

| Steighöhen von 30% iger KOH-Lösung bei einem fluorierten Polyolefin-Nassvlies | | | |
|---|---|---|---|
| [KOH] | Steighöhe | Steighöhe | Steighöhe |
| g/m$^2$ | (mm / 1 min) | (mm / 5 min) | (mm / 10 min) |
| 0 | 3 | 26 | 46 |
| 0.01 | 25 | 50 | 71 |
| 0.1 | 28 | 53 | 75 |
| 0.5 | 28 | 58 | 77 |

**Beispiel 3**

Es ist bekannt, dass sehr trockene Vliesstoffe eine stark reduzierte Benetzbarkeit aufweisen. Um den Einfluss der KOH-Tränkung auf dieses Verhalten zu ermitteln, wurden verschiedene unfluorierte Vliesstoffe in einem Trockenschrank 5 Stunden lang bei 105 °C getrocknet. Die Steighöhenbestimmung erfolgte unmittelbar nach der Trocknung. Die Werte sind in Tabelle 3 aufgeführt.

Tabelle 3:

| Steighöhen von 30% iger KOH-Lösung bei einem unfluorierten Polyolefin-Nassvlies nach 5-stündiger Trocknung bei 105 °C. | | | |
|---|---|---|---|
| [KOH] | Steighöhe | Steighöhe | Steighöhe |
| g/m$^2$ | (mm / 1 min) | (mm / 5 min) | (mm / 10 min) |
| 0 | 0 | 3 | 6 |
| 0.1 | 7 | 18 | 25 |
| 0.5 | 10 | 22 | 30 |

**Beispiel 4**

Sulfonierte Polyolefin-Vliesstoffe weisen eine sehr schlechte Anfangsbenetzbarkeit auf. Beim Tränken mit KOH-Lösung konnte eine extreme Verbesserung der Anfangsbenetzbarkeit festgestellt werden. Die Werte sind in Tabelle 3 aufgeführt

Tabelle 4:

| Steighöhen von 30% iger KOH-Lösung bei einem sulfonierten Polyolefin-Nassvlies | | | | |
|---|---|---|---|---|
| [KOH] | Steighöhe | Steighöhe | Steighöhe | Steighöhe |
| g/m$^2$ | (mm / 0.5 min) | (mm /1 min) | (mm / 5 min) | (mm / 10 min) |
| 0 | 0 | 0 | 0 | 2 |
| 0.1 | 30 | 43 | 80 | 100 |
| 0.5 | 30 | 45 | 80 | 100 |

**Beispiel 5**

Um die Übertragbarkeit der erhaltenen Daten zu zeigen, wurden Versuche mit einem Polyphenylidensulfid (PPS)-Nassvlies durchgeführt. Auch hier konnte eine Verbesserung der Benetzungseigenschaften erzielt werden (vgl. Tabelle 5).

Tabelle 5:

| Steighöhen von 30% iger KOH-Lösung bei einem Nassvlies auf Basis von Phenylidensulfid (PPS) | | | |
|---|---|---|---|
| [KOH] | Steighöhe | Steighöhe | Steighöhe |
| g/m$^2$ | (mm / 1 min) | (mm / 5 min) | (mm / 10 min) |
| 0 | 0 | 2 | 5 |
| 0.1 | 8 | 15 | 24 |
| 0.5 | 10 | 20 | 25 |

**Beispiel 6**

Tabelle 6:

| Steighöhen von 30% iger KOH-Lösung bei einem unfluorierten Polyolefin-Nassvlies | | | |
|---|---|---|---|
| [K$_2$CO$_3$] | Steighöhe | Steighöhe | Steighöhe |
| g/m$^2$ | (mm / 1 min) | (mm / 5 min) | (mm / 10 min) |
| 0 | 0 | 9 | 19 |
| 0.1 | 5 | 22 | 28 |
| 0.5 | 7 | 26 | 32 |

Tabelle 6: (fortgesetzt)

| Steighöhen von 30% iger KOH-Lösung bei einem unfluorierten Polyolefin-Nassvlies | | | |
|---|---|---|---|
| [K$_2$CO$_3$] | Steighöhe | Steighöhe | Steighöhe |
| g/m$^2$ | (mm / 1 min) | (mm / 5 min) | (mm / 10 min) |
| 1.0 | 15 | 32 | 38 |

**Beispiel 7**

Tabelle 7:

| Steighöhen von 30% iger KOH-Lösung bei einem **fluorierten** Polyolefin-Nassvlies | | | |
|---|---|---|---|
| [K$_2$CO$_3$] | Steighöhe | Steighöhe | Steighöhe |
| g/m$^2$ | (mm / 1 min) | (mm / 5 min) | (mm / 10 min) |
| 0 | 3 | 26 | 46 |
| 0.1 | 15 | 26 | 45 |
| 0.5 | 18 | 24 | 45 |
| 1.0 | 20 | 38 | 43 |

**Beispiel 8**

Tabelle 8:

| Steighöhen von 30% iger KOH-Lösung bei einem sulfonierten Polyolefin-Nassvlies | | | | |
|---|---|---|---|---|
| [K$_2$CO$_3$] | Steighöhe | Steighöhe | Steighöhe | Steighöhe |
| g/m$^2$ | (mm / 0.5 min) | (mm /1 min) | (mm / 5 min) | (mm / 10 min) |
| 0 | 0 | 0 | 0 | 2 |
| 0.1 | 22 | 29 | 62 | 80 |
| 0.5 | 22 | 31 | 65 | 83 |
| 1.0 | 25 | 34 | 67 | 85 |

- Die Tränkungsversuche zeigen bei allen untersuchten Materialien eine deutliche Verbesserung der Benetzbarkeit. Besonders bemerkenswert ist die sehr starke Verbesserung der Benetzbarkeit der sulfonierten Polyolefine.
- Der Effekt einer Tränkung mit KOH ist etwas besser als der durch K$_2$CO$_3$-Tränkung hervorgerufene.
- Durch Tränkung kann eine akzeptable Anfangsbenetzbarkeit von sehr trockenen Materialien erreicht werden.
- Schon geringe Konzentrationen an imprägnierter Substanz auf dem Vliesstoff (10 mg/m$^2$) führen zu einer signifikanten Verbesserung der Benetzbarkeit.

**Abschätzung der Beeinflussung der KOH-Konzentration im Elektrolyten durch den imprägnierten Separator**

Durch den mit KOH imprägnierten Separator könnte prinzipiell die KOH-Konzentration des Elektrolyten beeinflusst (erhöht) werden. Ausgehend von einer Separatorfläche von 50 cm$^2$ und einer Elektrolytmenge an 30%-iger KOH von 2 g würde sich bei einer Beladung des Separators mit KOH von 1 g/m$^2$ die KOH-Konzentration des Elektrolyten um rd. 10 ppm erhöhen. Diese potentielle Erhöhung ist als vernachlässigbar einzustufen.

**Abschätzung eines eventuell schädlichen Effektes durch entstandenes bzw. aufgebrachtes Kaliumcarbonat**

Festes Kaliumhydroxid kann bei feuchter Umgebung unter Anwesenheit von Kohlendioxid zu Kaliumcarbonat reagieren. Die Geschwindigkeit dieser Reaktion wird unter anderem beeinflusst durch a) den Partialdruck des CO$_2$, b) die Luftfeuchte und c) die Partikelgröße des abgeschiedenen Kaliumhydroxides. Bei einer angenommenen vollständigen Umwandlung des KOH in K$_2$CO$_3$ gemäß

$$2\,KOH + CO_2 + H_2O \rightarrow K_2CO_3 + 2\,H_2O$$

würde aus einer KOH-Beladung von 1,00 g/m$^2$ eine K$_2$CO$_3$-Beladung von 1,21 g/m$^2$ resultieren. Bei einer angenommenen Auflösung dieser Carbonat-Menge durch den Elektrolyten würde die resultierende CO$_3$$^{2-}$ -Konzentration (mit oben angenommenen Werten für Separatorfläche und Elektrolytvolumen) einen Wert von 1,3 ppm annehmen. Diese Carbonatkonzentration ist als nicht kritisch anzusehen; die typischen Carbonatkonzentrationen, hervorgerufen durch CO$_2$-Absorption des Elektrolyten bei der Befüllung, liegen um ca. 2 Größenordnungen höher.

Zur Bestimmung der CO$_2$-Aufnahme aus Luft und der daraus folgenden Carbonatbildung auf der Oberfläche der so hergestellten Vliesstoffe wurden Blätter für 7 Tage in einer reinen CO$_2$-Atmosphäre bei einem Druck von 0,5 MPa und Raumtemperatur ausgelagert. Die Abnahme der OH$^-$ -Konzentration vor und nach der Auslagerung wurde titrimetrisch gegen 0,1 n HCl bestimmt. Nach dieser Auslagerung waren ca. 15% des ursprünglich vorhandenen Hydroxides in Carbonat umgewandelt.

Entsprechend geringe Konzentrationen an freiem Carbonat im Batterie-Elektrolyten gelten für eine Tränkung mit K$_2$CO$_3$. Hier liegen die zu erwartenden Konzentrationen bei max. 1 ppm und damit weit unter den kritischen Werten.

**Patentansprüche**

1. Hydrophiliertes Separatormaterial aus synthetischen Fasern und/oder Filamenten, **dadurch gekennzeichnet, dass** das Separatormaterial vor seiner Verwendung mit 0,01 bis 10 g/m$^2$ Alkalihydroxid und/oder-carbonat imprägniert ist.

2. Hydrophiliertes Separatormaterial nach Anspruch 1, **dadurch gekennzeichnet, dass** die synthetischen Fasern und/oder Filamente chemikalienresistent gegen stark alkalische Lösungen sind.

3. Hydrophiliertes Separatormaterial nach Anspruch 1 und/oder 2, **dadurch gekennzeichnet, dass** die synthetischen Fasern und/oder Filamente als Vliesstoff vorliegen.

4. Hydrophiliertes Separatormaterial nach einem oder mehreren der Ansprüche 1 bis 3, **dadurch gekennzeichnet, dass** das Separatormaterial vor oder nach der Imprägnierung durch Sulfonierung, Fluorierung oder Pfropfung mit polaren Substanzen hydrophiliert ist.

5. Verfahren zur Herstellung eines hydrophilierten Separatormaterials aus synthetischen Fasern und/oder Filamenten, **dadurch gekennzeichnet, dass** man das Separatormaterial mit einer wässrigen Lösung eines Alkalihydroxids und/oder -carbonats imprägniert und anschließend trocknet.

6. Verfahren nach Anspruch 5, **dadurch gekennzeichnet, dass** die Hydroxide und/oder Carbonate von Lithium, Natrium und/oder Kalium eingesetzt werden.

7. Verfahren nach Anspruch 5 oder 6, **dadurch gekennzeichnet, dass** als synthetische Fasern und/oder Filamente solche aus Polyolefinen, Polyamiden, Polysulfonen, Polyphenylidensulfiden, Polyacetalen und/oder perfluorierten Polyolefinen eingesetzt werden.

8. Verfahren nach einem oder mehreren der Ansprüche 5 bis 7, **dadurch gekennzeichnet, dass** die synthetischen Fasern und/oder Filamente zu einem Vliesstoff oder einem Gewebe verarbeitet werden.

9. Verfahren nach Anspruch 8, **dadurch gekennzeichnet, dass** der Vliesstoff aus einer Mischung von Polyamid- und/oder Polyolefinfasern mit unterschiedlichem Erweichungsbereich besteht, wobei die niedriger schmelzenden Fasern in einem Gewichtsanteil von 30 bis 90% auf einer Krempelmaschine zu einem Vlies gelegt und dieses in einem Ofen durch Erweichen nur der niedriger schmelzenden Faseranteile und anschließender Kalibrierung durch Druck zur gewünschten Enddicke und nach Abkühlen zu einem autogen verschweißten Vliesstoff verfestigt werden.

10. Alkalische Batterie oder Zelle, **dadurch gekennzeichnet, dass** sie ein hydrophiliertes Separatormaterial gemäß einem oder mehreren der Ansprüche 1 bis 4 enthält.